# EUROPEAN PATENT SPECIFICATION

(11) **EP 1 154 166 B1**
(45) Date of publication and mention of the grant of the patent: **13.10.2004**
(21) Application number: 00304001.1
(22) Date of filing: 12.05.2000
(51) Int. Cl.: F16B 7/00

(54) **Attachment fitting for composite material structures**
Befestigungsanordnung für Verbundwerkstoffstrukturen
Dispositif de fixation pour structures en matériau composite

(43) Date of publication of application: 14.11.2001
(73) Proprietor: Nova Composites, Inc., Mukilteo, Washington 98275 (US)
(72) Inventor: Fillman, Gregory L., Washington 98059 (US)
(74) Representative: McLean, Robert Andreas

(56) References cited:
- DE-A- 1 932 949
- DE-A- 19 713 043
- US-A- 3 739 457
- US-A- 5 944 441

## Description

### a. Field of the Invention

The present invention relates generally to composite material structures, and, more particularly, to an attachment fitting at which generally axial loads are transmitted into such a composite material structure according to the first part of claim 1 (US 3739457).

### b. Related Art

Composite materials are used in the manufacture of a wide variety of structures, especially where a high strength-to-weight ratio is desired. As is known to those skilled in the art, and as is used in this description, composite materials (or simply "composites") are materials in which fibers (usually formed of a high tensile strength material) are imbedded in a resin matrix. Well known examples of composite materials include glass fiber-resin composites and graphite fiber-resin composites, the latter being particularly noted for high strength and light weight. Such materials are available from a large number of manufacturers, one example being Hexcel Corporation of Pleasanton, California, USA.

In recent years, composite materials have found increasing use in comparatively large, high-load applications, notably in air frames and orbital satellites, where minimization of weight is a critical consideration. In these applications, the composite material structures are ordinarily bolted or otherwise mounted in load-bearing attachment to one or more other components or structures, such as to struts, panels, rods, bars, brackets and so on, and an attachment fitting of some type is included in the composite material structure for this purpose. In order to provide a precise, durable attachment point, such fittings are ordinarily made of metal, with a socket or pin for attachment cf the other member.

Since the attachment fitting is normally formed of metal, a common prcblem arises as to how to mount the fitting to the fiber-resin material of the composite structure. In some instances, an adhesive has been employed for this purpose, but to form a strong bond requires expensive types of adhesives which are difficult and time-consuming to work with, and the adhesive joint almost invariably represents a weak spot. In other instances, flanges may be formed on the inner and outer ends of the fitting to engage the surfaces of the composite material structure; this results in an excessively heavy fitting, which negates the purpose of using a composite material in the first place, and moreover the transfer/distribution of the loads into the composite material structure is less than ideal.

Accordingly, there exists a need for an attachment fitting for composite material structures which is light in weight and which can be mounted to such structures without forming a weak point. Furthermore, there exists a need for such an attachment fitting which can be efficiently mounted to such a structure without requiring adhesives or the like to form the joint between the two. Still further, there exists a need for such a fitting which will transfer generally axial loads into the composite material structure in an efficient and evenly distributed manner, so as to obtain the full benefit of the load carrying capacity offered by the composite material. Still further, there exists a need for a method for mounting such an attachment fitting to a composite material structure in an efficient and inexpensive manner.

It is an object of the present invention to addresses the problems cited above, and to provide a load-bearing attachment fitting for use in composite material structures, and a method for use of the same.

### SUMMARY OF THE INVENTION

According to the invention, there is provided a load-bearing attachment fitting for a composite material structure, said attachment fitting comprising an elongate body member having a mounting portion for attachment to an external structure, and a plurality of undulations formed along a longitudinal side of said body member for engaging a fiber-resin matrix of said composite material structure.

Also according to the invention, there is provided a composite material structure, comprising a fiber-resin matrix and a load-bearing attachment fitting, said attachment fitting comprising an elongate body member having a mounting portion for attachment to an external structure, and a plurality of undulations formed along a longitudinal side of said body member, wherein the plurality of undulations engage with said fiber-resin matrix.

Also according to the invention, there is provided a method for forming a composite material structure, said method comprising the steps of:
a) forming a load-bearing attachment fitting, said attachment fitting having an elongate body member having a mounting portion for attachment to an external structure, and a plurality of undulations formed along longitudinal side of said body member for engaging a fiber-resin matrix of said composite material structure;
b) placing at least one layer of lengthwise fibers over said attachment fitting so that said lengthwise fibers follow said undulations in said side of said body members so as to be in load-bearing engagement therewith; and
c) placing at least one layer of crosswise fibers over said lengthwise fibers on said attachment fitting, so that said crosswise fibers extend generally around said attachment fitting so as to hold said lengthwise fibers in engagement with said undulations along said attachment fitting.

The attachment fitting is an elongate member that may have a series of generally sinusoidal undulations along its longitudinal sides, and a mounting portion attaching the fitting to an external structure. The undulations may form ridges and grooves configured for load-bearing engagement of a surrounding fiber-resin matrix.

The elongate member of the attachment fitting may be a generally cylindrical member, and the sinusoidal undulations may form a series of generally annular ridges and grooves along the cylindrical member. The means for mounting the fitting to an adjacent structure may be a generally axial bore through the fitting, and the bore may have internal threads over at least a portion thereof.

The composite material structure may be an elongate strut having first and second attachment fittings mounted in axial alignment at opposite ends of the strut.

In accordance with the method of the present invention, a composite material structure is fabricated by mounting the attachment fitting adjacent an internal form member and laying at least one fiber-resin layer over the fitting and form member so that the fitting and form member are joined thereby, and so that at least a portion of the fibers in the fiber-resin layer engage the preferably sinusoidal ridges and grooves of the attachment fitting.

The at least one fiber-resin layer may be at least one lengthwise fiber layer in which the fibers thereof extend in a direction generally parallel to generally axial loads which are applied to the attachment fitting. The at least one lengthwise fiber-resin layer may be overlain with at least one crosswise fiber layer in which the fibers extend generally circumferentially around the attachment fitting so as to retain the lengthwise fibers therein.

The lengthwise fiber-resin layer may comprise at least one strip of fiber-resin tape which is placed over the fitting and form, and the crosswise fiber-resin layer may comprise fiber which is wound over the fitting and the lengthwise fibers.

The form may comprise a fluidizable plaster mandrel. After casting, the plaster mandrel may be removed by washing this out through the threaded bore in the attachment fitting.

### BRIEF DESCRIPTION OF THE DRAWINGS

The invention will now be described by way of example, with reference to the accompanying drawings, in which:
Figure 1 is an elevational view of an attachment fitting in accordance with the present invention, showing the generally sinusoidal contour of the longitudinal sides thereof;
Figure 2 is an end view of the attachment fitting of Figure 1, showing the generally cylindrical configuration of the fitting, and the flats along the sides thereof which prevent the fitting from turning within the composite material body;
Figure 3 is an elevational view of a longitudinal cross-section taken through the attachment fitting of Figure 1, showing the internally threaded bore thereof;
Figure 4 is an elevational view of a second attachment fitting which is generally similar to that which is shown in Figure 1, but which is somewhat longer for increased load bearing capacity;
Figures 5 to 13 are a series of views showing the sequential steps in the formation of a fiber-resin composite structure having an attachment fitting in accordance with the present invention, Figure 5 being an elevational view of a generally cylindrical mandrel over which an exemplary composite material strut is formed in accordance with the method of the present invention;
Figure 6 is an elevational view, similar to Figure 5, showing conical mandrel pieces having been placed at the ends of the main cylindrical mandrel, and also showing the attachment fittings of the present invention having been placed against the outer ends of the conical end pieces and secured in place by removable collars;
Figure 7 is an elevational view of the assembly of Figure 6, showing the manner in which a first fiber layer is formed by helical winding of fiber material thereon;
Figure 8 is an elevational view, partly in cross-section, showing the formation of one or more axially aligned fiber layers by placement of a series of longitudinal fiber-resin strips over the assembly;
Figure 9 is an elevational view showing the formation of an outer fiber layer in which the fiber material is again wound onto the assembly, with the helically-wound fibers serving to hold the axial fibers in conformity with the sinusoidal surfaces of the attachment fittings at the ends of the assembly;
Figure 10 is an elevational view of the assembly of Figure 11, showing an outer layer of removable tape being wound thereon for retaining the fiber layers in position during subsequent heating and curing of the materials;
Figure 11 is a cross-sectional view showing the exemplary composite material strut which has been constructed in Figures 5 to 10 being cured at an elevated temperature in an autoclave;
Figure 12 is an elevational view of the assembly of Figure 10, showing the outer tape layer being removed after the fiber-resin layers have been cured to form a rigid strut member;
Figure 13 is an elevational view of the strut member of Figure 11, showing the removal of the internal mandrel by washing this out with a flow of water or other fluid; and
Figure 14 is a partial, cross-sectional view of an end portion of the finished strut of Figure 13, showing the manner in which the series of cured fiber-resin layers engage the sinusoidal exterior of the attachment fitting so as to retain the fitting in the composite material structure and effect the transfer of loads thereto.

### DETAILED DESCRIPTION

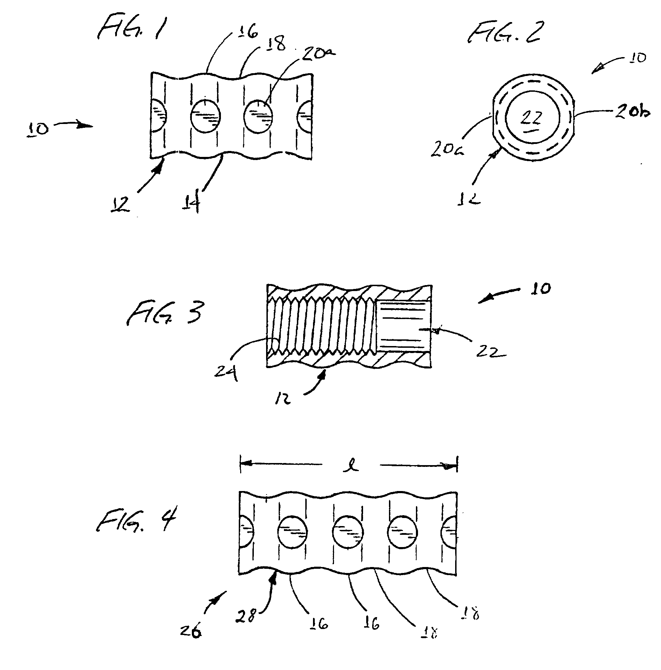

Figure 1 shows an attachment fitting 10 in accordance with the present invention. As will be described in greater detail below, the attachment fitting is mounted at a predetermined location within a composite material structure so as to transfer generally axial loads to the fiber/resin structure thereof.

As can be seen in Figure 1, the attachment fitting 10 includes a generally cylindrical body 12 formed of a suitable metal, such as titanium, for example, and having a sinusoidal external surface 14 which defines a plurality of alternating crests and grooves 16,18. As is used herein, the term "sinusoidal" is not limited to those curves which are defined precisely by a sine function, but includes all generally similar, undulating surface configurations having a series of alternating, generally annular crests and grooves. Each annular ridge preferably has first and second flats 20a,20b on generally opposite sides thereof, so that a series of flats extends along each side of the cylindrical body so as to prevent the fitting from turning within the fiber-resin matrix when torque is applied thereto.

The fitting 10 also includes an axial bore 22 having internal threads 24 over at least a part of its length. The threaded bore is configured to receive the end of a bolt or threaded rod for attachment to another component, such as another strut or a panel, for example. In some embodiments, the fitting may have an axially extending stud, with cr without threads, or other form of coupling in addition to or in place of the threads in the bore for attachment to the adjacent component. Moreover, in some embodiments the attachment fitting may be formed of a non-metallic material, such as high-strength plastic or ceramic material, for example.

As is shown in Figure 14, and as will be described in greater detail below, the generally cylindrical attachment fitting is embedded in the structure so that the annular ridges/grooves are engaged by the surrounding fiber-resin matrix. This forms an extremely strong engagement between the metallic and composite components without requiring an adhesive, and also ensures effective transfer of axial loads into the composite material.

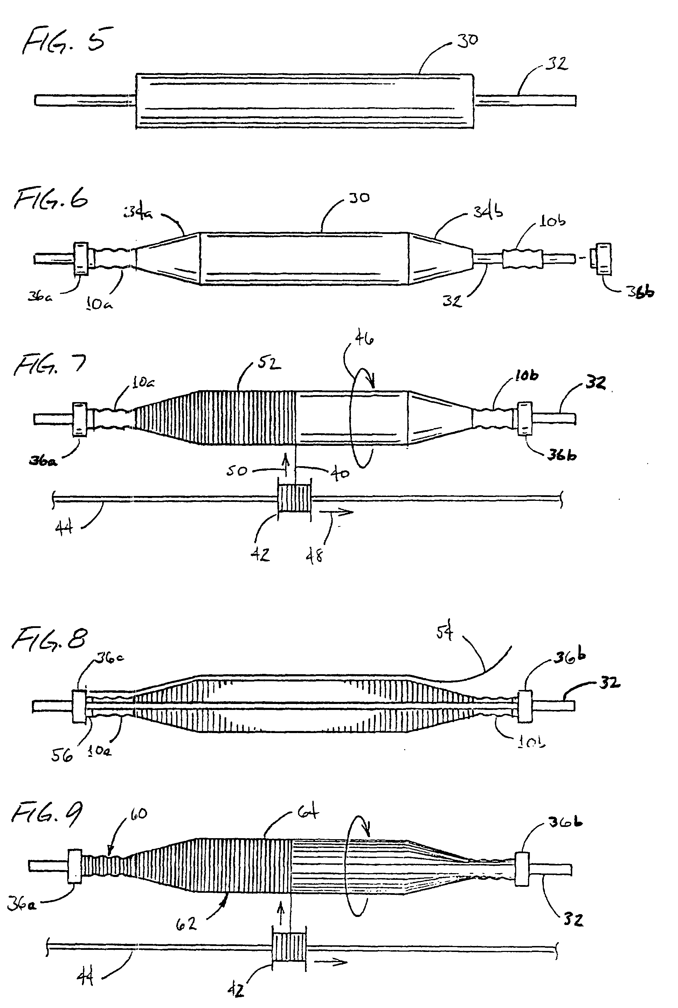

Moreover, for greater or lesser axial loads, the length "1" can be increased or decreased without necessarily changing the diameter of the cylindrical body. For example, the attachment fitting 26 which is shown in Figure 4 has the same overall configuration as the fitting 10 in Figure 1, except that it has a body 28 with increased length to provides it with one more set of ridges and grooves 16,18 with which to engage the surrounding fiber-resin matrix, thereby providing greater resistance to displacement by axial loads.

As will also be described in greater detail below, during fabrication of the structure the fiber-resin layers are pressed into engagement with the cylindrical fitting so that the longitudinal fibers closely follow the ridges/grooves thereon. In this respect, the smooth, generally sinusoidal undulations of the fitting have been found to have the great advantage of allowing a close interfit, without forcing the fibers to bend through excessively sharp angles which could cause a breakage or reduction of strength. Although the actual height and width of the ridges and grooves will vary somewhat according to the qualities of the materials used in the fiber-resin matrix and the design requirements of the structure (e.g., larger structures will generally require larger ridges/grooves, due in part to the larger number of fiber/resin layers used to form the walls of such structures), a somewhat shallow sinusoidal curve is generally preferred, with a curve having an approximate 8:1 width-to-height ratio being eminently suitable for use with commonly available carbon fiber-resin materials such as those which are described below.

Figures 5 to 13 illustrate the sequential steps in the construction of an exemplary composite material strut using the axial load attachment fittings of the present invention. In this example, the strut is an elongate structure having first and second identical, axially aligned attachment fittings at each end, through which loads are transmitted to one or both ends of the strut. It will be understood, however, that the attachment fittings and methods disclosed herein may be used with other suitable forms of load bearing composite material structures, such as beams, brackets, panels and tubes, to give just a few examples. Moreover, it will be understood that while the exemplary embodiment which is shown in the figures employs a carbon fiber-resin matrix material, the present invention is not so limited, and may be used with other suitable types of fibers and resin materials, such as glass, Kevlar, (trade mark) UHMWPE or liquid crystal fibers, for example.

As the first step in the fabrication of an exemplary strut in accordance with the present invention, a primary internal form or mandrel member 30 having a cylindrical or other suitable shape is fitted over a support shaft 32 which extends axially beyond both ends of the member. The mandrel member is formed of a suitable fluidizable material (such as a fluidizable plaster, for example) which can be subsequently removed by fluidizing and washing this out of the interior of the finished article, as will be described in greater detail below.

First and second generally conically tapered mandrel end pieces 34a, 34b are placed on rod 32 so that these abut the ends of the main mandrel member 30 and form a smooth outward taper; rather than using separate conical pieces, the tapers can be formed by machining the ends of the cylindrical main mandrel member 30, or the main mandrel member may be cast or otherwise initially formed with the desired taper. For most axial/compressive loading applications the taper is preferably about 5° or less, so as to minimize development of outwardly directed bending or buckling forces in the area where the fibers transition from the conical taper into the cylindrical well of the strut.

The first and second attachment fittings 10a, 10b are then slid over the support rod and against the outer ends of the conical end pieces. The support rod 32 has a diameter that is sized to cooperate with the internal bores of the attachment fittings and mandrel pieces so as to stabilize these in axial alignment for the subsequent molding steps.

Finally, as can also be seen in Figure 6, first and second end collars 36a,36b are slid over the rod member and are pressed against the outer end of the attachment fittings so as to force the pieces of the assembly together. The end collars are then locked in place against the shaft 32 using a set screw (not shown) or other suitable mechanism.

After the mandrel assembly has been secured on the support rod 32, a first, base layer 52 of carbon fiber thread 40 is wound onto the mandrel pieces; since the fibers in this layer 52 extend generally crosswise or perpendicular to the long axis of the assembly, this is referred to as a first "90°" layer, although the fibers will not always be at this exact angle. As is shown in Figure 7, the fiber thread 40 is wound onto the surface of the plaster mandrel assembly from a spool 42 which is supported for rotation on a shaft 44 which extends adjacent and parallel to the main support shaft 32. Thus, as the mandrel assembly is rotated in the direction indicated by arrow 46 in Figure 7 and the spool 42 is moved longitudinally along the secondary shaft 44, in the direction indicated by arrow 48, the fiber thread is fed off of the spool and wound along a generally helical path about the form, as indicated by arrow 50. This first 90° fiber layer 52 extends from the base of the first attachment fitting 10a to the base of the second fitting 10b, but preferably does not extend over the sinusoidal outer surfaces of the fittings themselves.

After the 90° fiber base layer 52 has been laid down on the mandrel assembly, this is covered with a series of strips 54 formed of "prepreg" graphite fiber-resin tape. The "prepreg" tape material can be formed in comparatively narrow strips, and includes a multiplicity of graphite fibers 55 (see Figure 14) which run generally parallel to one another and which are embedded in a resin material which is soft and easily moldable as originally supplied, but which becomes fluid when heated and then cures to form a hardened matrix. The fibers 55 in the tape layers 54 extend generally lengthwise or longitudinally over the fitting and form and are referred to as "0°" fibers, although again it will be understood that they may not follow this exact angle, and in some embodiments the lengthwise fibers 55 may extend at angles on the order of 45° or more.

Suitable prepreg tape materials are typically about 5-6 thousandths of an inch thick and are available from a number of suppliers of composite material products, including Hexcel Corporation (see above). Moreover, a "prepreg" yarn made up of a bundle of fibers may be used in place of plain carbon thread for the 90° windings, which has the advantage of ease of use and added bonding to the 0° "prepreg" type material; for example, a suitable "prepreg" yarn having a diameter of about 3.2 mm (1/8 inch) is available as "towpreg" material from the Hexcel company noted above.

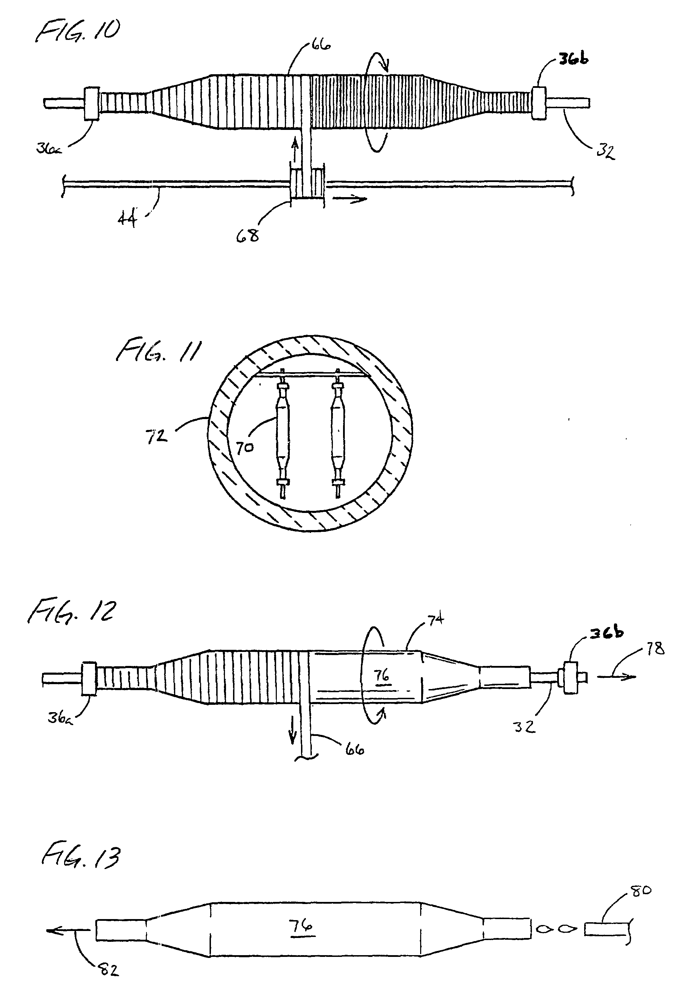

As can be seen in Figure 8, the strips of prepreg tape 54 are laid down generally parallel to the long axis of the assembly and in generally edge-to-edge relationship, so as to form a 0° fiber layer that completely encases the assembly. As can also be seen in Figure 8, the 0° fiber layer 54 (unlike the underlying 90° layer) extends beyond the ends of the mandrel pieces and out over the sinusoidal surfaces of the attachment fittings; the terminal ends of the strips overlap bosses 56 on the collar members 36a, 36b, so that any unevenness amongst the ends of the strips can be removed by trimming the structure flat with the end faces of the attachment fittings after curing.

The prepreg graphite-resin tape material is applied to form a predetermined number of 0° fiber layers 54, depending on the type of material used and the design strength of the finished strut or other structure: In the case of the exemplary strut which is shown in the figures, the number of 0° fiber layers 54 may suitably be in the range from about three to about 15 or more.

The 0° layers 54 form the main load-bearing component of the structure. After these have been placed on the layup assembly, another layer of 90° fibers is wound onto the assembly, as can be seen in Figure 9. The purpose of this outer 90° layer 64 is to retain the 0° layers against spreading, and also to force and hold the 0° layers in the sinusoidal grooves of the end fittings. To do this, a plurality (e.g., four to ten) layers of the 90° fibers are installed over the end fittings, in the area 60 in Figure 9, although a single outer 90° layer is typically sufficient for the main body 62 of the structure. Moreover, in some embodiments the layup assembly may be shrink wrapped repeatedly (not shown) to force the 0° fiber-resin layers into the proper shape and into conformity with the end fittings, before application of the 90° windings 64.

In some embodiments the fiber-resin walls of the structure may be relatively thick, especially where the structure itself is comparatively large. For example, the tubular wall of a foot long strut having the general configuration which is shown in the drawings (and which has an axial load strength of about 90,000 kg) may require on the order of 35 layers of 0° fiber-resin "prepreg" material. In these cases, a 90° winding is preferably applied for every few (e.g., five) 0° layers, with subsequent layers being applied over the top of this.

After the outer 90° windings 64 have been completed, a release film (not shown) is applied to the exterior of the layup assembly, and the assembly is then wound with shrink tape 66 from a second spool 68, as is shown in Figure 10. The shrink wrap tape may be applied in one or more layers, and serves to retain the fluid resin from escaping during the subsequent heating and curing steps. Preferably, the width of the heat shrink tape is equal to or somewhat greater than the annular channels on the exterior of the 90° windings 64 over the attachment fittings, so as to ensure even filling of these areas during the subsequent heating and curing steps.

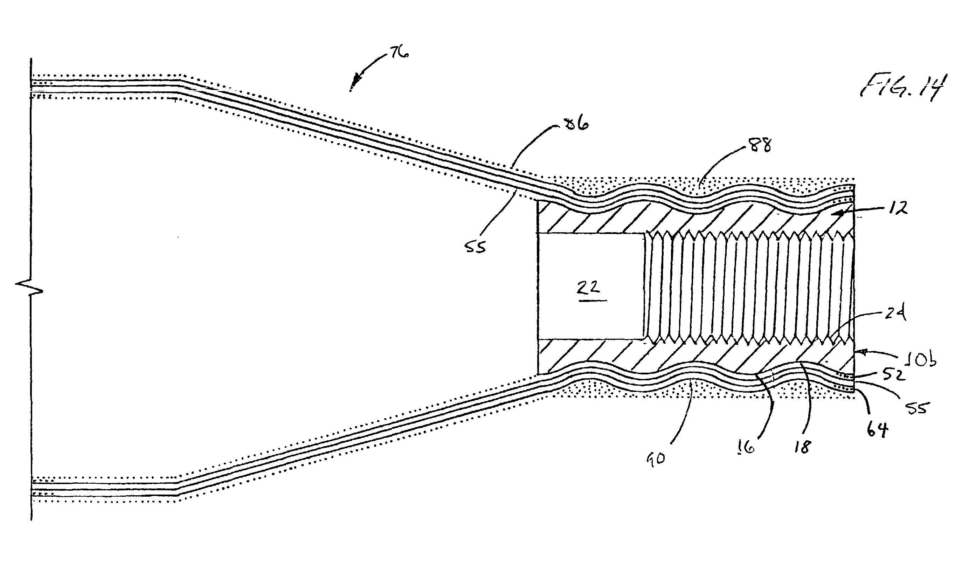

The completed layup assemblies 70 are placed in an autoclave 72 or other suitable heating apparatus for heating/curing of the resin material. As can be seen in Figure 11, the layup assemblies are preferably heated and cured in a vertical orientation (i.e., with the long axis extending in a vertical direction), so as to minimize sagging of the material and to insure a more uniform finished cross-section. Heating is performed at temperature and time parameters, which are specified by the manufacturer of the prepreg fiber-resin tape material. While heated, the resin component of the 0° prepreg tape layers becomes molten and permeates the adjoining 90° fiber windings, with the outer layer of shrink wrap tape maintaining the exterior configuration and preventing escape of the resin in its fluid state.

After a predetermined period of heating and subsequent cooling, the resin component cures to form a permanently rigid matrix. The shrink wrap tape 66 is then unwound and the release film is removed, as shown in Figure 12, leaving the smooth external surface 74 of the cured strut 76. Collar members 36a,36b are then detached from the shaft and removed, and the shaft 32 is driven out of the layup assembly in the direction indicated by arrow 78. A jet or flow of water 80 or other suitable liquid is then directed through the hollow core which is left by removal of the central rod 32, so as to fluidize the plaster mandrel members (not shown in Figure 13). The fluidized material is flushed out from the interior of the strut 76 and discharged through the bore of the attachment fitting 10a at the opposite end, as indicated by arrow 82. The ends of the composite layers are then trimmed flush with the end faces of the attachment fittings.

Figure 14 is a cross-sectional view of one end of the finished strut 76, primarily showing the relationship between the 0° (axial) fiber layers 55 and the sinusoidal external surface 16 of the attachment fitting 10b. As can be seen, the resin component, when molten, permeates the fiber structure and wells out between the outer 90° fibers and the heat shrink tape to form a smooth, generally continuous outer shell 86 which fully encapsulates the fiber layers. In the area over the attachment fittings in particular, the resin layer forms a hardened casing 88 which fills in the annular channels 90 on the outside of the fibers, thereby preventing the latter from spreading or sliding out of engagement with the corresponding ridges/grooves of the metallic fitting. As was noted above, the series of flats 20a,20b along the sides of the fitting, in turn, prevent the fitting from turning within the composite material structure under application of torque. Moreover, because the 0° fibers are in direct engagement with the attachment fitting (as noted above, the inner 90° winding does not extend onto the fitting itself), axial loads are transmitted directly and efficiently into the load carrying axial fibers 55 of the structure.

## Claims

1. A load-bearing attachment fitting (10,26) for a composite material structure (76), said attachment fitting (10,26) comprising an elongate body member (12,28) having a mounting portion (20,24) for attachment to an external structure, **characterized in that** a plurality of undulations (16,18) are formed along a longitudinal side (14) of said body member (12,28) for engaging a fiber-resin matrix (52,55,64,88) of said composite material structure.

2. An attachment fitting (10,26) as claimed in claim 1, wherein said plurality of undulations comprises a plurality of generally sinusoidal undulations (16,18) formed in said side (14) of said fitting (10,26).

3. An attachment fitting (10,26) as claimed in claim 1 or claim 2, wherein said elongate body member (12,28) comprises an elongate, generally cylindrical body member (12,28) having first and second ends.

4. An attachment fitting (10,26) as claimed in claim 3, wherein said plurality of sinusoidal undulations comprises a plurality of generally annular ridges and grooves (16,18) which extend around said generally cylindrical body member (12,28).

5. An attachment fitting (10,26) as claimed in any preceding claim, wherein said mounting portion comprises means (20,24) for threadingly mounting said attachment fitting (10,26) to said external structure.

6. An attachment fitting (10,26) as claimed in claim 5, wherein said means (20,24) for threadingly mounting said fitting (10,26) to said external structure comprises a threaded bore (20,24) which extends from an end of said elongate body member (12,28) into an interior thereof.

7. An attachment fitting (10,26) as claimed in any preceding claim, wherein said body member (12,28) further comprises at least one flat (20a,20b) formed on said longitudinal side (14) of said body member (12,28) for engaging said fiber-resin matrix so as to prevent said body member (12,28) from turning therein in response to application of torque to said body member (12,28).

8. A composite material structure (76), comprising a fiber-resin matrix and a load-bearing attachment fitting (10,26), wherein the load-bearing attachment fitting (10,26) is as claimed in any preceding claim, and the plurality of undulations (16,18) engage with said fiber-resin matrix (52,55,64,88).

9. A composite material structure (76) as claimed in claim 8, wherein said fiber-resin matrix (52,55,64,88) comprises at least one fiber layer (52,64) which follows said undulations (16,18) in said side (14) of said elongate body member (12,28) so as to be in load-bearing engagement therewith.

10. A composite material structure (76) as claimed in claim 9, wherein said at least one fiber layer comprises: at least one layer (54) of lengthwise fibers (55) which extend generally longitudinally over said attachment fitting (10,26) so as to transmit loads from said fitting (10,26); and at least one layer (52,54) of crosswise fibers which extend generally around said attachment fitting (10,26) so as to hold said lengthwise fibers (55) in engagement with said undulations (16,18) along said attachment fitting (10,26).

11. A composite material structure (76) as claimed in any of claims 8 to 10, when appendant from claim 5, wherein the means (20,24) for threadingly mounting said attachment fitting (10,26) to said external structure is such that loads are transferred from said external structure to said attachment fitting (10,26) in a generally axial direction.

12. A composite material structure (76) as claimed in claim 11, comprising an elongate strut (76) having first and second said attachment fittings (10a,10b) mounted to opposite ends of said strut in generally coaxial alignment.

13. A method for forming a composite material structure (76), said method comprising the steps of:
a) forming a load-bearing attachment fitting (10,26), said attachment fitting (10,26) having an elongate body member (12,23) having a mounting portion (10,26) for attachment to an external structure, and a plurality of undulations (16,18) formed along longitudinal side (14) of said body member (12,28) for engaging a fiber-resin matrix (52,55,64,88) of said composite material structure (76);
b) placing at least one layer (54) of lengthwise fibers (55) over said attachment fitting (10,26) so that said lengthwise fibers follow said undulations (16,18) in said side (14) of said body member (12,28) so as to be in load-bearing engagement therewith; and
c) placing at least one layer (64) of crosswise fibers over said lengthwise fibers (55) on said attachment fitting (10,26), so that said crosswise fibers extend generally around said attachment fitting (10,26) so as to hold said lengthwise fibers (55) in engagement with said undulations 16,18) along said attachment fitting (10,26).

14. A method as claimed in claim 13, wherein the step b) comprises laying at least one strip of fiber-resin tape (54) over said attachment fitting (10,26) so that fibers (55) in said tape (54) extend generally longitudinally along said fitting (10,26) in conformity with said undulations (16,18) thereon.

15. A method as claimed in claim 13 or claim 14, wherein the step c) comprises winding fiber crosswise (64) over said lengthwise fibers (55) and around said attachment fitting (10, 26) so that said crosswise fiber (64) holds said lengthwise fiber (55) in conformity with said undulations (16,18) along said fitting (10,26).

16. A method as claimed in any of claims 13 to 15, wherein said mounting portion of said attachment fitting (10,26) comprises a bore (22) which extends lengthwise through said elongate body member (12,28) of said fitting (10,26).

17. A method as claimed in any of claims 13 to 16, further comprising the steps of:
d) placing said attachment fitting (10,26) adjacent to a fluidizable form (30) for forming a body portion of said composite material structure(76); and
e) placing said lengthwise and crosswise fiber-resin layers (54;52,64) over said attachment fitting (10,26) and said form (30) so that said attachment fitting (10,26) is embedded integrally within said composite material structure (76).

18. A method as claimed in claim 17, further comprising the steps of:
f) curing said fiber-resin layers (52,54,64) on said fluidizable form (30) and said attachment fitting (10,26); and
g) removing said fluidizable form (30) from an interior of said composite material structure (76) by washing (80) said form out (82) through said lengthwise bore (22) in said elongate body member (12,28).

## Patentansprüche

1. Lasttragendes Befestigungsanschlussstück (10, 26) für eine Verbundmaterialstruktur (76), wobei das Befestigungsanschlussstück (10, 26) einen länglichen Körper (12, 28) mit einem Montageabschnitt (20, 24) zum Befestigen an einer äußeren Struktur aufweist, **dadurch gekennzeichnet, dass** eine Mehrzahl von Wellenformen (16, 18) entlang einer Längsseite (14) des Körpers (12, 28) ausgebildet sind, die zur Ineingriffnahme einer Faser-Harz-Matrix (52, 55, 64, 88) der Verbundmaterialstruktur dienen.

2. Befestigungsanschlussstück (10, 26) nach Anspruch 1, wobei die Mehrzahl von Wellenformen eine Mehrzahl von allgemein sinusförmigen Well.enformen (16, 18) aufweisen, die in der Seite (14) des Anschlussstücks (10, 26) ausgebildet sind.

3. Befestigungsanschlussstück (10, 26) nach Anspruch 1 oder 2, wobei der längliche Körper (12, 28) einen länglichen, allgemein zylindrischen Körper (12, 28) mit einem ersten und einem zweiten Ende aufweist.

4. Befestigungsanschlussstück (10, 26) nach Anspruch 3, wobei die Mehrzahl von sinusförmigen Wellenformen eine Mehrzahl von allgemein ringförmigen Wülsten und Rillen (16, 18) aufweist, die um den allgemein zylindrischen Körper (12, 28) herum verlaufen.

5. Befestigungsanschlussstück (10, 26) nach den vorangehenden Ansprüchen, wobei der Montageabschnitt ein Mittel (20, 24) aufweist, mit dem das Befestigungsanschlussstück (10, 26) mit der externen Struktur in Gewindeeingriff gebracht wird.

6. Befestigungsanschlussstück (10, 26) nach Anspruch 5, wobei das Mittel (20, 24), mit dem das Anschlussstück (10, 26) mit der externen Struktur in Gewindeeingriff gebracht wird, eine mit Gewinde versehene Bohrung (20, 24) aufweist, die sich von einem Ende des länglichen Körpers (12, 28) in ein Inneres des Körpers hinein erstreckt.

7. Befestigungsanschlussstück (10, 26) nach den vorangehenden Ansprüchen, wobei der Körper (12, 28) des Weiteren mindestens eine Abflachung (20a, 20b) aufweist, die auf der Längsseite (14) des Körpers (12, 28) ausgebildet ist, um die Faser-Harz-Matrix dergestalt in Eingriff zu nehmen, dass sich der Körper (12, 28) nicht in der Matrix drehen kann, wenn an den Körper (12, 28) ein Drehmoment angelegt wird.

8. Verbundmaterialstruktur (76), die eine Faser-Harz-Matrix und ein lasttragendes Befestigungsanschlussstück (10, 26) aufweist, wobei das lasttragende Befestigungsanschlussstück (10, 26) nach den vorangehenden Ansprüchen konfiguriert ist und die Mehrzahl von Wellenformen (16, 18) sich mit der Faser-Harz-Matrix (52, 55, 64, 88) in Eingriff befinden.

9. Verbundmaterialstruktur (76) nach Anspruch 8, wobei die Faser-Harz-Matrix (52, 55, 64, 88) mindestens eine Faserschicht (52, 64) aufweist, die den Wellenformen (16, 18) in der Seite (14) des länglichen Körpers (12, 28) derart folgt, dass sie sich mit dem länglichen Körper in lasttragendem Eingriff befindet.

10. Verbundmaterialstruktur (76) nach Anspruch 9, wobei die mindestens eine Faserschicht folgendes umfasst: mindestens eine Schicht (54) aus längs-orientierten Fasern (55), die allgemein derart längs über das Befestigungsanschlussstück (10, 26) verlaufen, dass sie Lastkräfte von dem Anschlussstück (10, 26) übertragen; und mindestens eine Schicht (52, 54) aus quer-orientierten Fasern, die allgemein derart um das Befestigungsanschlussstück (10, 26) herum verlaufen, dass sie die längs-orientierten Fasern (55) mit den Wellenformen (16, 18) entlang dem Befestigungsanschlussstück (10, 26) in Eingriff halten.

11. Verbundmaterialstruktur (76) nach den Ansprüchen 8 bis 10, wenn sie von Anspruch 5 abhängig sind, wobei das Mittel (20, 24), mit dem das Befestigungsanschlussstück (10, 26) mit der externen Struktur in Gewindeeingriff gebracht wird, so konfiguriert ist, dass Lastkräfte von der externen Struktur zu dem Befestigungsanschlussstück (10, 26) in einer allgemein axialen Richtung übertragen werden.

12. Verbundmaterialstruktur (76) nach Anspruch 11, die eine längliche Strebe (76) aufweist, wobei ein erstes und ein zweites Befestigungsanschlussstück (10a, 10b) ah gegenüberliegenden Enden der Strebe in allgemein koaxialer Ausrichtung angebracht sind.

13. Verfahren zur Herstellung einer Verbundmaterialstruktur (76), wobei das Verfahren folgende Schritte umfasst:
a) Herstellen eines lasttragenden Befestigungsanschlussstücks (10, 26), wobei das Befestigüngsanschlussstück (10, 26) einen länglichen Körper (12, 28) mit einem Montageabschnitt (10 26 ) zum Befestigen an einer äußeren Struktur sowie eine Mehrzahl von Wellenformen (16, 18), die entlang einer Längsseite (14) des Körpers (12, 28) ausgebildet sind und zur Ineingriffnahme einer Faser-Harz-Matrix (52, 55, 64, 88) der Verbundmaterialstruktur (76) dienen, aufweist;
b) Anordnen mindestens einer Schicht (54) aus längs-orientierten Fasern (55) über dem Befestigungsanschlussstück (10, 26), dergestalt, dass die längs-orientierten Fasern den Wellenformen (16, 18) in der Seite (14) des Körpers (12, 28) derart folgen, dass sie sich mit dem Körper in lasttragendem Eingriff befinden; und
c) Anordnen mindestens einer Schicht (64) aus quer-orientierten Fasern über den längs-orientierten Fasern (55) auf dem Befestigungsanschlussstück (10, 26), dergestalt, dass die quer-orientierten Fasern allgemein derart um das Befestigungsanschlussstück (10, 26) herum verlaufen, dass sie die längs-orientierten Fasern (55) mit den Wellenformen (16, 18) entlang dem Befestigungsanschlussstück (10, 26) in Eingriff halten.

14. Verfahren nach Anspruch 13, wobei der Schritt b) das Legen mindestens eines Streifens eines Faser-Harz-Bandes (54) über das Befestigungsanschlussstück (10, 26) umfasst, dergestalt, dass Fasern (55) in dem Band (54) allgemein längs entlang des Anschlussstücks (10, 26) in Übereinstimmung mit den darauf befindlichen Wellenformen (16, 18) verlaufen.

15. Verfahren nach Anspruch 13 oder 14, wobei der Schritt c) das Wickeln der Faser in Querrichtung (64) über den längs-orientierten Fasern (55) und um das Befestigungsanschlussstück (10, 26) herum umfasst, dergestalt, dass die quer-orientierte Faser (64) die längs-orientierte Faser (55) in Übereinstimmung mit den Wellenformen (16, 18) entlang des Anschlussstücks (10, 26) hält.

16. Verfahren nach den Ansprüchen 13 bis 15, wobei der Montageabschnitt des Befestigungsanschlussstücks (10, 26) eine Bohrung (22) aufweist, die sich in Längsrichtung durch den länglichen Körper (12, 28) des Anschlussstücks (10, 26) erstreckt.

17. Verfahren nach den Ansprüchen 13 bis 16, das des Weiteren folgende Schritte umfasst:
d) Anordnen des Befestigungsanschlussstücks (10, 26) neben einer fluidisierbaren Form (30) zum Formen eines Körperabschnitts der Verbundmaterialstruktur (76); und
e) Anordnen der längs-orientierten und quer-orientierten Faser-Harz-Schichten (54; 52, 64) über dem Befestigungsanschlussstück (10, 26) und der Form (30) dergestalt, dass das Befestigungsanschlussstück (10, 26) integral in die Verbundmaterialstruktur (76) eingebettet ist.

18. Verfahren nach Anspruch 17, das des Weiteren folgende Schritte umfasst:
f) Aushärten der Faser-Harz-Schichten (52; 54, 64) auf der fluidisierbaren Form (30) und dem Befestigungsanschlussstück (10, 26); und
g) Entfernen der fluidisierbaren Form (30) aus einem Inneren der Verbundmaterialstruktur (76) durch Ausspülen (80, 82) der Form durch die Längsbohrung (22) in dem länglichen Körper (12, 28).

## Revendications

1. Dispositif de fixation supportant une charge (10, 26) pour une structure en matériau composite (76), ledit dispositif de fixation (10, 26) comprenant un élément de corps allongé (12, 28) comportant une partie de montage (20, 24) pour une fixation à une structure externe, **caractérisé en ce qu'**une pluralité d'ondulations (16, 18) sont formées le long d'un côté longitudinal (14) dudit élément de corps (12, 28) pour venir en prise avec une matrice de fibres et de résine (52, 55, 64, 88) de ladite structure en matériau composite.

2. Dispositif de fixation (10, 26) selon la revendication 1, dans lequel ladite pluralité d'ondulations comprend une pluralité d'ondulations généralement sinusoïdales (16, 18) formées dans ledit côté (14) dudit dispositif (10, 26).

3. Dispositif de fixation (10, 26) selon la revendication 1 ou la revendication 2, dans lequel ledit élément de corps allongé (12, 28) comprend un élément de corps allongé généralement cylindrique (12, 28) comportant des première et deuxième extrémités.

4. Dispositif de fixation (10, 26) selon la revendication 3, dans lequel ladite pluralité d'ondulations sinusoïdales comprend une pluralité de crêtes et de creux généralement annulaires (16, 18) qui s'étendent autour dudit élément de corps généralement cylindrique (12, 28).

5. Dispositif de fixation (10, 26) selon l'une quelconque des revendications précédentes, dans lequel ladite partie de montage comprend des moyens (20, 24) pour le montage par filetage dudit dispositif de fixation (10, 26) sur ladite structure externe.

6. Dispositif de fixation (10, 26) selon la revendication 5, dans lequel lesdits moyens (20, 24) pour le montage par filetage dudit dispositif (10, 26) sur ladite structure externe comprend un trou fileté (20, 24) qui s'étend à partir d'une extrémité dudit élément de corps allongé (12, 28) vers l'intérieur de celui-ci.

7. Dispositif de fixation (10, 26) selon l'une quelconque des revendications précédentes, dans lequel ledit élément de corps (12, 28) comprend, en outre, au moins un plat (20a, 20b) formé sur ledit côté longitudinal (14) dudit élément de corps (12, 28) pour venir en prise avec ladite matrice de fibres et de résine de manière à empêcher ledit élément de corps (12, 28) de tourner sur celle-ci en réponse à l'application d'un couple audit élément de corps (12, 28).

8. Structure en matériau composite (76), comprenant une matrice de fibres et de résine et un dispositif de fixation supportant une charge (10, 26), dans laquelle le dispositif de fixation supportant une charge (10, 26) est tel que revendiqué dans l'une quelconque des revendications précédentes, et la pluralité d'ondulations (16, 18) vient en prise avec ladite matrice de fibres et de résine (52, 55, 64, 88).

9. Structure en matériau composite (76) selon la revendication 8, dans laquelle ladite matrice de fibres et de résine (52, 55, 64, 88) comprend au moins une couche de fibres (52, 64) qui suit lesdites ondulations (16, 18) dans ledit côté (14) dudit élément de corps allongé (12, 28) de manière à être en prise en supportant une charge avec celles-ci.

10. Structure en matériau composite (76) selon la revendication 9, dans laquelle ladite au moins une couche de fibres comprend au moins une couche (54) de fibres dans le sens de la longueur (55) qui s'étendent généralement longitudinalement sur ledit dispositif de fixation (10, 26) de manière à transmettre des charges provenant dudit dispositif de fixation (10, 26) ; et au moins une couche (52, 54) de fibres dans le sens de la largeur qui s'étendent généralement autour dudit dispositif de fixation (10, 26) de manière à maintenir lesdites fibres dans le sens de la longueur (55) en prise avec lesdites ondulations (16, 18) le long dudit dispositif de fixation (10,26).

11. Structure en matériau composite (76) selon l'une quelconque des revendications 8 à 10, lorsqu'elle est dépendante de à la revendication 5, dans laquelle les moyens (20, 24) pour le montage par filetage dudit dispositif de fixation (10, 26) sur ladite structure externe sont tels que des charges sont transférées de ladite structure externe audit dispositif de fixation (10, 26) dans une direction généralement axiale.

12. Structure en matériau composite (76) selon la revendication 11, comprenant un support allongé (76), des premier et deuxième dispositifs de fixation (10a, 10b) étant montés aux extrémités opposées dudit support dans un alignement généralement coaxial.

13. Procédé pour former une structure en matériau composite (76), ledit procédé comprenant les étapes consistant à :
a) former un dispositif de fixation supportant une charge (10, 26), ledit dispositif de fixation (10, 26) comportant un corps allongé (12, 28) comportant une partie de montage (10, 26) pour une fixation à une structure externe et une pluralité d'ondulations (16, 18) formées le long d'un côté longitudinal (14) dudit élément de corps (12, 28) pour venir en prise avec une matrice de fibres et de résine (52, 55, 64, 88) de ladite structure en matériau composite (76) ;
b) placer au moins une couche (54) de fibres dans le sens de la longueur (55) sur ledit dispositif de fixation (10, 26) de sorte que lesdites fibres dans le sens de la longueur suivent lesdites ondulations (16, 18) dans ledit côté (14) dudit élément de corps (12, 28) de manière à être en prise supportant une charge avec celles-ci ; et
c) placer au moins une couche (64) de fibres dans le sens de la largeur sur lesdites fibres dans le sens de la longueur (55) sur ledit dispositif de fixation (10, 26), de sorte que lesdites fibres dans le sens de la largeur s'étendent généralement autour dudit dispositif de fixation (10, 26) de manière à maintenir lesdites fibres dans le sens de la longueur (55) en prise avec lesdites ondulations (16, 18) le long dudit dispositif de fixation (10, 26).

14. Procédé selon la revendication 13, dans lequel l'étape b) comprend le dépôt d'au moins une bande de ruban de fibres-résine (54) sur ledit dispositif de fixation (10, 26) de sorte que les fibres (55) dans ledit ruban (54) s'étendent généralement longitudinalement le long dudit dispositif (10, 26) en conformité avec lesdites ondulations (16, 18) sur celui-ci.

15. Procédé selon la revendication 13 ou la revendication 14, dans lequel l'étape c) comprend l'enroulement de la fibre dans le sens de la largeur (64) sur lesdites fibres dans le sens de la longueur (55) et autour dudit dispositif de fixation (10, 26) de sorte que ladite fibre dans le sens de la largeur (64) maintienne ladite fibre dans le sens de la longueur (55) en conformité avec lesdites ondulations (16, 18) le long dudit dispositif (10, 26).

16. Procédé selon l'une quelconque des revendications 13 à 15, dans lequel ladite partie de montage dudit dispositif de fixation (10, 26) comprend un alésage (22) qui s'étend dans le sens de la longueur à travers ledit élément de corps allongé (12, 28) dudit dispositif (10, 26).

17. Procédé selon l'une quelconque des revendications 13 à 16, comprenant en outre les étapes consistant à :
d) placer ledit dispositif de fixation (10, 26) adjacent à une forme fluidifiable (30) pour former une partie de corps de ladite structure en matériau composite (76) ; et
e) placer lesdites couches de fibres et de résine dans le sens de la longueur et dans le sens de la largeur (54 ; 52, 64) sur ledit dispositif de fixation (10, 26) et ladite forme (30) de sorte que ledit dispositif de fixation (10, 26) soit entièrement intégré dans ladite structure en matériau composite (76).

18. Procédé selon la revendication 17, comprenant en outre les étapes consistant à :
f) cuire lesdites couches de fibres et de résine (52, 54, 64) sur ladite forme fluidifiable (30) et ledit dispositif de fixation (10, 26) ; et
g) retirer ladite forme fluidifiable (30) d'un intérieur de ladite structure en matériau composite (76) par lavage (80) de ladite forme (82) à travers ledit alésage dans le sens de la longueur (22) dans ledit élément de corps allongé (12, 28).
